# EUROPEAN PATENT SPECIFICATION

(11) **EP 2 834 568 B1**
(45) Date of publication and mention of the grant of the patent: **28.05.2025**
(21) Application number: 13720099.4
(22) Date of filing: 08.04.2013
(51) Int. Cl.: F24D 3/10

(54) **EXPANSION VESSEL**
EXPANSIONSGEFÄSS
VASE D'EXPANSION

(30) Priority: 06.04.2012 NL 2008613; 06.04.2012 US 201261621045 P
(43) Date of publication of application: 11.02.2015
(73) Proprietor: Aalberts hfc B.V., 1358 DB Almere (NL)
(72) Inventor: CNOSSEN, Jan, Henk, NL-8723 CP Koudum (NL); DEVLIN, Terence, Arthur, NL-7312 AP Apeldoorn (NL); REEZIGT, Herman, NL-8072 HJ Nunspeet (NL)
(74) Representative: EP&C
(86) International application number: PCT/NL2013/050257
(87) International publication number: WO 2013/151441

(56) References cited:
- DE-A1- 19 740 674
- DE-C1- 19 733 982
- US-A- 6 066 287
- "Blow molding", 21 February 2012 (2012-02-21), XP055049893, Retrieved from the Internet <URL:en.wikipedia.org/w/index.php?title=Blow_molding&oldid=478117819> [retrieved on 20130116]

## Description

### Field of the invention

The present invention relates to an improved method for manufacturing an expansion vessel comprising a membrane. The invention further relates to an improved expansion vessel comprising the membrane. The present invention further relates to an assembly for manufacturing expansion vessels.

### Discussion of the prior art

Expansion vessels are known in the field of the art. Expansion vessels are widely used in heating systems for buildings, often in combination with a boiler. Expansion vessels are also known for other purposes, such as for suspension systems for vehicles.

Various embodiments of expansion vessels are known. EP1876395A1 discloses an embodiment of an expansion vessel. The expansion vessel comprises two metal halves and is divided into a gas chamber and a water chamber by a membrane. The outer perimeter of the membrane is mounted into the expansion vessel via a membrane holder extending outward with respect to the outer wall of the expansion vessel.

A disadvantage of such an expansion vessel is that it is quite difficult to manufacture and has a limited lifespan.

A method of manufacturing an expansion vessel comprising a housing and a membrane which divides the housing in two volumes, the method comprising:-providing the housing,- providing a membrane comprising a thermoplastic material,-providing a mould having a non-flat form,- providing a vacuum/blowing device which is constructed to deform the membrane according to the shape of the mould by providing an overpressure or under pressure on one side of the membrane,-deforming the membrane with the vacuum/blowing device according to the shape of the mould, thereby allowing the thermoplastic material to deform plastically,-connecting the membrane directly or indirectly to the housing of the expansion vessel, is known from document DE 197 40 674 A1.

### Summary of the invention

The invention provides a method of manufacturing an expansion vessel comprising a housing and a membrane which divides the housing in two volumes, the method comprising:
- providing the housing,
- providing a membrane comprising a thermoplastic material,
- providing a mould having a non-flat form,
- providing a vacuum/blowing device which is constructed to deform the membrane according to the shape of the mould by providing an over pressure or under pressure on one side of the membrane,
- providing a heating device which is configured for providing heat to the membrane during the vacuum/blow moulding process,

the method comprising the further steps of:
   - deforming the membrane with the vacuum/blowing device according to the shape of the mould, while providing heat to the membrane with the heating device, thereby allowing the thermoplastic material to deform plastically,
   - cooling the deformed membrane to below the temperature wherein the thermoplastic material deforms, thereby forming the thermoplastic material in a non-flat form according to the shape of the mould, and
   - connecting the membrane directly or indirectly to the housing of the expansion vessel,
wherein the method comprises using the housing or a part of the housing of the expansion vessel as the mould.

The present invention provides an improvement in terms of a membrane having a greater longevity and ease of assembly in an expansion vessel.

In an embodiment, the membrane is connected to an annular membrane holder prior to being deformed with the vacuum/blowing device, wherein the membrane holder is configured to be connected to the housing of the expansion vessel. This stepwise manufacture provides a reliable quality in connections. Traditionally, the membrane is clenched between the two vessel halves by a clenching ring. Although this works, the clenching ring connects three parts in one connection operation. In the present embodiment, the connection operation is split into two separate, consecutive steps, which increases reliability in the assembly process.

Another advantage is that the expansion vessel with the membrane holder does not have a ridge which extends outwardly from the housing, as expansion vessels with clenching rings generally do.

In an embodiment, the method comprises:
- providing a housing comprising a first housing part and a second housing part,
- connecting the membrane to one housing part, directly or indirectly via a membrane holder,
- blow-moulding the membrane in the housing, followed by cooling the membrane in order to provide the membrane in its new, non-flat form,
- joining the first housing part and the second housing part, directly or indirectly via the membrane holder, thereby forming the housing.

In an embodiment, the membrane material is flat prior to being connected directly or indirectly to the housing.

In an embodiment, the membrane is connected permanently to the housing, directly or indirectly via the membrane holder, prior to the forming of the membrane with the blow-moulding process.

In an embodiment, the housing part into which the membrane is blow moulded is formed prior to the connecting of the membrane material with the housing part. The housing parts may be of metal and are formed in a separate, earlier process. The housing can also be made of any other material which is suitable, such as a synthetic material, in particular a hard plastic.

In an embodiment, the method comprises the subsequent steps of:
∘ engaging the outer region of the membrane directly or indirectly with a first housing part;
∘ positioning a second housing part against the first housing part, thereby forming the vessel and fixating the membrane,
∘ connecting the housing parts,
∘ blow-moulding the membrane.

In this way, the blow-moulding takes place in the completed housing.

In an embodiment, the method comprises the step of directly clenching the membrane between the housing parts. This results in a relatively simple expansion vessel. In an embodiment, the membrane is clenched between the housing parts without a clenching ring.

In an embodiment of the method, a region of overlap is formed between the first and second housing parts, the region comprising:
o a clenching region and
o a connecting region,
wherein the membrane is clenched between the housing parts in the clenching region and wherein the housing parts are connected to one another in the connecting region. The clenching region and connecting region may be separate regions. In an embodiment, the membrane may be clenched between the housing parts without the use of a clenching ring. The clenching region and connecting region may be adjoining, separate regions.

This results in a simple and effective way of making expansion vessels.

In an embodiment, the method comprises pulling membrane material from a roll of membrane material, engaging the membrane material with a first housing part, placing the second housing part over the first housing part and cutting away excess material of the membrane. This process can be used to manufacture large series of expansion vessels effectively.

In an embodiment, a first housing part is smaller than a second housing part, and wherein in the blow moulding step the membrane is blow moulded against the second, larger housing part. This embodiment provides the advantage that once in use, the membrane is never subjected to pure tensile stresses. Even if the membrane is expanded to the maximum state, i.e. against the wall against it was blow moulded, it will not be brought under tensile stress because the membrane is only brought into the same position in which it was blow moulded.

If in use the membrane is pressed against the wall of the small volume, it is also not under tensile stress, because the membrane can contact the vessel wall of the smaller volume without being stretched. Therefore, in use, the membrane is never stretched beyond the blow-moulding position. The absence of stretching was found to have particular favorable effects on the annular region of the membrane adjacent the membrane holder. In use, this region will flex during varying operating conditions. If the deforming is limited to flexing and does not comprise pure stretching, i.e. pure tensile stresses, the lifespan was found to be greater than in a situation where apart from flexing tensile stresses occur due to stretching.

In the operating state, the membrane may be primarily in a flexed position in the small volume. This reduces the stresses in the annular region of the membrane which is adjacent to the annular membrane holder.

This would be different if the membrane divides the volume in a large volume and a small volume and is subsequently blow moulded against the wall of the small volume. If - in use - the membrane is then pressed against the wall of the large volume, the membrane will need to be stretched.

In an embodiment, the method comprises providing a membrane which comprises at least:
- a first, protective layer comprising a thermoplastic material,
- a second, gas-impermeable layer comprising a gas-impermeable thermoplastic material,
- a third, protective layer comprising a thermoplastic material which may be the same or different from the thermoplastic material of the first protective layer.

This embodiment allows the membrane to adopt the shape of the vessel in an easy way. Moreover, the membrane does not have to be detached from the mould after being formed.

In an embodiment, the second layer comprises Ethylene Vinyl Alcohol (EVOH).

In an embodiment, the first and third layers comprise one or more layers of the same or a different thermoplastic polymer, preferably a thermoplastic polymer having a melting point temperature, Tm, of less than 200°C and a glass transition temperature, Tg, of less than 20°C or a mixture of such polymers, more preferably a thermoplastic polymer preferably selected from one or more of the polymers comprising polyolefins (more preferably polyethylene, such as high density polyethylene, low density polyethylene, propylene, and butylene; including ethylene copolymers and propylene copolymers and butylene copolymers), polyamines, polyesters, and polyurethanes.

In an embodiment, the first and third layers comprise:
- a layer of Poly Ethylene (PE), in particular High Density Poly Ethylene (HDPE) or Low Density Poly Ethylene (LDPE), or
- a layer of Poly Propylene (PP), or
- a layer of Thermo Plastic Urethane (TPU) or a sublayer of Poly Acetylene (PA).

These materials were found to provide good mechanical protection, a good water impermeability and good characteristics for bonding with the housing.

In an embodiment, the method comprises stacking multiple membranes onto one another and connecting the multiple membranes directy or indirectly to a housing of the expansion vessel. Advantageously, the multiple layers provide better air-tightness for certain gasses, for example for nitrogen.

In an embodiment, the method comprises comprising connecting the membrane to the housing of the expansion vessel or to a membrane holder by bonding an outer perimeter of the membrane to the surface of the housing or membrane holder. The bonding may be chemical bonding. Alternatively, the bonding may be physical bonding.

In this embodiment, the surface area of the membrane which contacts the housing or membrane holder can be chosen quite large, so that a subsequent laser welding operation - in which a small local deterioration of the membrane may take place - does not seriously effect the strength or impermeability of the total connection between the membrane and the housing or membrane holder. The surface area of the membrane which contacts the housing or membrane holder may be at least twice the surface area which is affected disadvantageously by the weld.

In an embodiment, the method comprises:
- inserting the membrane holder into the housing of the expansion vessel prior to the deforming of the membrane, wherein an outer perimeter of the membrane holder is circumferentially abutted to an inner side of a wall of the housing,
- providing a laser welding device at an outer side of the housing;
- welding the membrane holder to the inner wall of the housing by the laser welding device by directing a laser beam at a contact area between the membrane holder and the inner side of the wall of the housing.

The combination of a plastically deformed membrane with a laser welding operation has been found to provide a particularly reliable manufacturing operation.

In an embodiment of the method, the laser beam penetrates through the wall of the housing and at least reaches a portion of the membrane holder to form a weld between the housing and the membrane holder.

In an embodiment of the method, the welding comprises providing a line weld which extends circumferentially around the inside of the wall of the expansion vessel for providing a first fluid tight connection between the membrane holder and the housing. With the line weld, a good fluid-tightness and air-tightness can be achieved. In an embodiment, the method comprises:
- providing a membrane holder comprising an first ring and a second ring which are constructed to mate with one another,
- clenching an outer region of the membrane between the first and second ring,
- inserting the inner ring, outer ring and membrane into the housing,
- connecting the outer ring to the housing.

The combination of two mating rings was found to be very reliable. The first and second ring may be an inner and outer ring.

In an embodiment, the method comprises:
- providing a housing comprising a first metal part and a second metal part,
   wherein the first and second metal part comprise respective first and second overlapping sections which are constructed to overlap one another in a region of overlap,
- providing the membrane holder at the region of overlap,
- directing the laser beam at the region of overlap and heating:
   1. the first metal part,
   2. the second metal part, and
   3. the membrane holder
   simultaneously, thereby welding said three parts to one another.

In an embodiment, the method comprises:
- providing the inner ring with a protruding or receding part which extends along the outer circumference of the inner ring,
- providing the outer ring with a mating receding respectively protruding part which extends along the inner circumference of the outer ring,
- clicking the inner ring and the outer ring into one another, wherein the outer region of the membrane is clenched between them.

One ring may have a convex mating part and the other ring may have a mating concave part, which parts clench and curve the membrane between them.

The present invention further relates to an expansion vessel comprising a housing and a membrane which divides the housing in two volumes, characterized in that the expansion vessel is manufactured with the method according to claim 1, wherein the membrane comprises a thermoplastic material, and wherein in rest, i.e. with equal pressure on both sides of the membrane, the membrane has a non-flat form.

In an embodiment, the membrane comprises at least:
- a first, protective layer comprising a thermoplastic material,
- a second, gas-impermeable layer comprising a gas-impermeable thermoplastic material,
- a third, protective layer comprising a thermoplastic material.

Traditionally, membranes of expansion vessels, in particular for heating systems, are manufactured from rubber. The present embodiment is a significant step in this field which leads to a longer lifespan.

In an embodiment, the second layer of the membrane comprises Ethylene Vinyl Alcohol (EVOH).

In an embodiment, the first and third layers comprise one or more layers of the same or a different thermoplastic polymer, preferably a thermoplastic polymer having a melting point temperature, Tm, of less than 200°C and a glass transition temperature, Tg, of less than 20°C or a mixture of such polymers, more preferably a thermoplastic polymer preferably selected from one or more of the polymers comprising polyolefins (more preferably polyethylene, such as high density polyethylene, low density polyethylene, propylene, and butylene; including ethylene copolymers and propylene copolymers and butylene copolymers), polyamines, polyesters, and polyurethanes.

In an embodiment of the membrane, the first and third layers comprise:
- a layer of Poly Ethylene, in particular High Density Poly Ethylene (HDPE) or Low Density Poly Ethylene (LDPE), and/or
- a layer of Poly Propylene (PP), and/or
- a layer of Thermo Plastic Urethane (TPU) and/or
- a layer of Poly Acetylene.

The present invention further relates to an expansion vessel, characterized in that it is manufactured according to the method of claim 1, wherein the expansion vessel comprises a membrane comprising a thermoplastic material, wherein in rest, i.e. with equal pressure on both sides of the membrane, the membrane has a non-flat form. The expansion vessel has a long lifetime and can be assembled relatively easy.

In an embodiment of the expansion vessel, the membrane has a substantially hat-shaped form in rest, comprising an outer region which is substantially flat and an inner region which is at least partially curved and defines a volume. In an embodiment of the expansion vessel, the membrane has a form which in rest is similar to the form of a part of a housing of the expansion vessel.

In an embodiment, the expansion vessel comprises a membrane holder for holding the membrane, wherein an outer perimeter of the membrane is connected to the housing via the membrane holder. In an embodiment, the membrane holder comprises an inner ring and an outer ring between which an outer region of the membrane is clenched. This embodiment can be manufactured relatively simple. In another embodiment, the membrane holder comprises a single ring configured to hold the membrane.

In an embodiment, the expansion vessel comprises a housing comprising a first metal part and a second metal part, wherein the first and second metal parts comprise respective first and second overlapping sections which are constructed to partly overlap one another in a region of overlap, the expansion vessel further comprising a membrane holder which is positioned at the region of overlap, and wherein the first metal part, the second metal part and the membrane holder are connected to one another with a circumferential weld.

In an embodiment, the expansion vessel comprises:
- an inner ring having a protruding or receding part on the outer side which extends along the outer circumference of the inner ring,
- an outer ring having a mating receding respectively protruding part which extends along the inner circumference of the outer ring,
wherein the inner ring and the outer ring are clicked into one another, the outer region of the membrane being clenched between them.

In an embodiment according to the present disclosure, the membrane holder is configured to force the membrane to curve subsequently:
1. in a first direction of curvature,
2. in a second, opposite direction of curvature,
3. inward, into the vessel, and
4. subsequently outward, to the wall of the housing,
when travelling along the membrane from a position just inward of the membrane holder to the outer ridge of the membrane.

The four curves can be defines as four curve regions of the membrane. In other words, the membrane comprises the following four curve regions:
1. a first region of curvature having a first direction of curvature,
2. a second region of curvature having a second, opposite direction of curvature
3. a third region of curvature having a curvature inward, into the vessel, and
4. a fourth region of curvature having a curvature outward, to the wall of the vessel.

In an embodiment, the expansion vessel comprises multiple membranes which are stacked onto one another. Preferably, the membranes are connected to a membrane holder, but it is also possible to connect the membranes directly to the housing.

The present assembly further relates to an assembly for manufacturing an expansion vessel, the assembly comprising:
- a mould for forming a membrane of the expansion vessel, the mould having a non-flat form,
- a vacuum/blowing device which is constructed to deform the membrane according to the shape of the mould by providing an over pressure or under pressure on one side of the membrane,
- a heating device which is configured for providing heat to the membrane during the vacuum/blow moulding process,
wherein the assembly comprises a support for supporting a formed housing part of the expansion vessel, wherein the vacuum/blowing device is constructed to provide an under pressure in said housing part or provide an over pressure in the other housing part for blow-moulding the membrane while using said housing part as a mould.

The present disclosure further relates to a method of manufacturing an expansion vessel comprising a housing and a membrane which divides the housing in two volumes, the method comprising:
- providing a housing of the expansion vessel;
- inserting a membrane holder into the housing of the expansion vessel prior to the deforming of the membrane, wherein an outer perimeter of the membrane holder is circumferentially abutted to an inner side of a wall of the housing,
- providing a laser welding device at an outer side of the housing;
- welding the membrane holder to the inner wall of the housing by the laser welding device by directing a laser beam at a contact area between the membrane holder and the inner side of the wall of the housing.

The laser welding operation obviates the use of a known clenching ring which protrudes from the outside of the housing and which connects three parts .

In an embodiment, the method comprises:
- providing a membrane holder comprising a first ring and a second ring which are constructed to mate with one another,
- clenching an outer region of the membrane between the first ring and the second ring,
- inserting the first ring, second ring and membrane into the housing,
- connecting the first and/or second ring to the housing.

The method allows a reliable manufacturing process. The method can be performed with a rubber membrane and with a membrane comprising a thermoplastic material.

The first and second ring may be an inner ring and an outer ring.

In another embodiment, the method comprises:
- providing a housing comprising a first metal part and a second metal part,
   wherein the first and second metal part comprise respective first and second overlapping sections which are constructed to overlap one another in a region of overlap,
- providing the membrane holder at the region of overlap,
- directing the laser beam at the region of overlap and heating:
   1. the first metal part,
   2. the second metal part, and
   3. the membrane holder
   simultaneously, thereby welding said three parts to one another.

This embodiment provides a simple and effective connection operation for three different components, while at the same time creating air-tightness and fluid-tightness.

In an embodiment, the method comprises:
- providing a first ring with a protruding or receding part which extends along the circumference of the first ring,
- providing the second ring with a mating receding respectively protruding part which extends along the circumference of the second ring,
clicking the first ring and the second ring into one another, wherein the outer region of the membrane is clenched between them. The protruding part may be convex, and the mating receding part may be concave.

In an embodiment, the method comprises:
- providing the inner ring with a protruding or receding part which extends along the outer circumference of the inner ring,
- providing the outer ring with a mating receding respectively protruding part which extends along the inner circumference of the outer ring,
- clicking the inner ring and the outer ring into one another, wherein the outer region of the membrane is clenched between them.

The present disclosure further relates to an expansion vessel, comprising:
- a housing comprising a first metal part and a second metal part, wherein the first and second metal parts comprise respective first and second overlapping sections which are constructed to overlap one another in a region of overlap,
- a membrane holder which is positioned at the region of overlap, wherein the first metal part, the second metal part and the membrane holder (38) are connected to one another via a circumferential weld in the region of overlap.

In an embodiment of the expansion vessel, the membrane holder comprises:
- an inner ring having a protruding or receding part on the outer side which extends along the outer circumference of the inner ring,
- an outer ring having a mating receding respectively protruding part which extends along the inner circumference of the outer ring,
wherein the inner ring and the outer ring are clicked into one another, the outer region of the membrane being clenched between them.

In an embodiment, the expansion vessel comprises:
- an inner ring having a protruding or receding part on the outer side which extends along the outer circumference of the inner ring,
- an outer ring having a mating receding respectively protruding part which extends along the inner circumference of the outer ring,
wherein the inner ring and the outer ring are clicked into one another, the outer region of the membrane being clenched between them.

In order to form the expansion vessel, the membrane itself is connected to the membrane holder in a fluid-tight manner, either before or after inserting the membrane holder in the housing, and either before or after connecting the membrane holder to the housing.

### Brief description of the figures

In the following, the aspects, features and advantages of the present invention will be elucidated further by reference to the annexed figures illustrating exemplary embodiments. In the figures, the same parts or parts having the same function have been identified with the same reference numeral.
Figures 1A, 1B and 1D schematically show a method of forming the membrane according to the invention.
Figures 2A, 2B, 2C and 2D show a part of the expansion vessel according to the invention.
Figure 3 shows an embodiment of the expansion vessel according to the invention.
Figure 4 shows a sectional view of a membrane.
Figure 5a shows in a partial sectional view a step in a method of bonding a membrane onto a membrane holder.
Figure 5b shows in a further partial sectional view another step in the method of figure 5a.
Figure 5c shows in a further partial sectional view another step in the method of figure 5a.
Figure 5d shows in a further partial sectional view another step in the method of figure 5a.
Figure 6a shows in a partial sectional view a step in a method of bonding a membrane onto a housing part.
Figure 6b shows in a further partial sectional view another step in the method of figure 6a.
Figure 6c shows in a further partial sectional view another step in the method of figure 6a.
Figure 6d shows in a further partial sectional view another step in the method of figure 6a.
Figure 7 shows a step of manufacturing another embodiment.
Figures 8A - 8D shows further steps in the manufacturing of the embodiment of figure 7.
Figure 9 shows a detail in cross-section of the embodiment of figures 7 and 8A - 8D.

### Detailed description of the invention

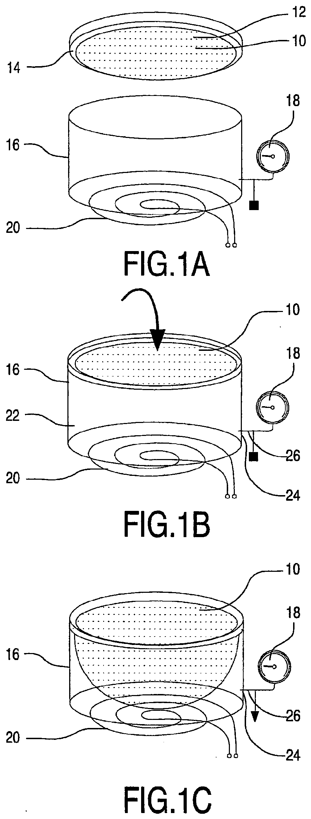

Turning to figures 1A, 1B and 1C, a membrane 10 comprising a thermoplastic material is provided which is connected along its outer ridge 12 to a membrane holder 14. The membrane holder can be a metal ring. The membrane holder 14 is manufactured from a corrosion resistant alloy. The thermoplastic material of the membrane is elastic, which allows an elastic deformation of the membrane when a pressure difference exists between the two opposing sides of the membrane.

A mould 16 is provided and a vacuum device or blowing device 18 is provided for creating an underpressure or overpressure on one side of the membrane, in order to deform the membrane. The mould 16 may be one half 50 of the housing of the expansion vessel, or at least a part of a housing of the expansion vessel.

The combination of membrane holder 14 and membrane 10 is placed in the vessel halve 16 or in the special forming mould. The mould is a part of the housing, and the membrane holder is welded to the housing part via a laser weld. The housing part into which the membrane is blown moulded is formed prior to the connecting of the membrane material with the housing part.

The welding operation may take place prior to the deforming process and is further discussed herein below. In this way a permanent connection is created between the membrane and the vessel halve prior to the forming of the membrane with the blow-moulding process.

In an embodiment falling outside the scope of the claims, the mould is a separate mould. The membrane holder may be connected to the mould in a variety of ways.

A heating device 20 is positioned at the bottom of the vessel halve or mould in order to provide heat to the membrane 10. A vacuum is created in the space 22 defined between the membrane 10 and the vessel halve 16, by sucking out the air through an opening 24 with the vacuum device 18 which is in fluid connection with the space between the membrane and the mould 16 via a conduit 26. Simultaneously, the membrane is heated with the heating device 20. The thermoplastic material in the membrane becomes soft and mouldable and deforms in a plastic way. The plasticity results from the thermoplastic nature of the material. The membrane substantially adopts the form of the vessel halve 16 or, in the embodiment falling outside the scope of the claims, special forming mould 16.

When the membrane has deformed, the heating device is turned off and the membrane cools back to the original temperature. The membrane adopts its new, non-flat form, while remaining deformable due to its elasticity, as the membrane should be in order to let the expansion vessel function properly.

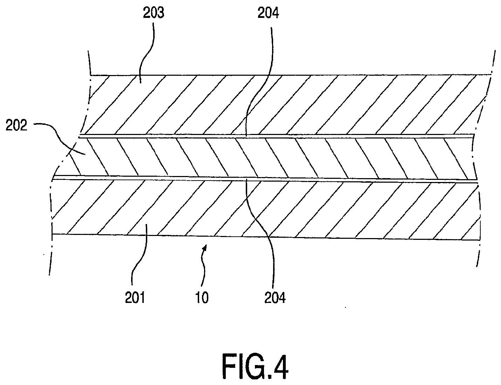

Different materials can be used for the membrane 10. In an embodiment, the membrane is composed of multiple layers. This aspect is further discussed in relation to figure 4.

It is also possible that multiple membranes of the above mentioned kind are stacked, and together act as a compound membrane. The different membranes are connected at the circumference of the outer region via the membrane holder.

The layers of the membrane are all elastic, in order to allow the membrane to deform in its normal use temperature, when in use the pressures inside the expansion vessel varies.

Other kinds of membranes which can be plastically deformed with pressure and heat may be used.

If a special forming mould is used, the membrane holder and membrane 10 are first deformed in the special forming mould, are subsequently disconnected and removed from the mould, are placed in the housing and welded to the housing.

If the housing is used as a mould 16, the membrane 10 is left in place. After the deforming process, the heating device and the vacuum/blowing device are removed from the housing part. Next, the remaining parts of the expansion vessel are fitted.

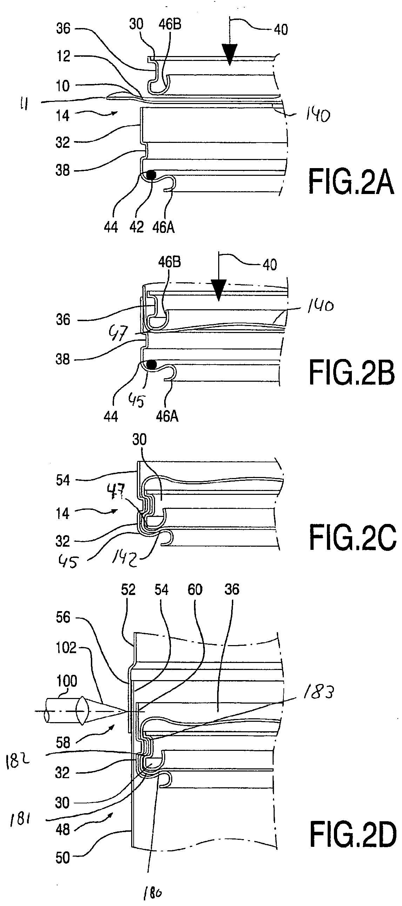

Turning to figures 2A, 2B, 2C, 2D, in an embodiment, the membrane holder 14 comprises an inner ring 30 and an outer ring 32, which fit into one another and form a click-connection. An outer region 12 of the membrane 10 is positioned between the two rings 30, 32. In this embodiment, the membrane 10 may not comprise a thickened outer ridge.

The inner ring comprises a receding part 36 which extends along the outer circumference of the inner ring. The outer ring comprises a protruding part 38 which extends along the inner circumference of the outer ring. However, this may also be vice versa, with a protruding part on the inner ring and receding part on the outer ring. The receding part and the protruding part mate with one another to form the click-connection when the inner ring is moved into the outer ring in the direction of arrow 40. The receding part 36 may be concave, while the protruding part 38 may be convex. The outer region 12 extends upward between the inner and outer ring.

The outer ring may comprise a seat portion 42 for a seal. A rubber sealing ring 44 may be provided at the seat portion 42 of the outer ring, to provide air-tightness and fluid tightness between the inner ring and outer ring. This function of air-tightness and fluid tightness may also be provided by the membrane 10 itself.

The outer ring also defines a curve 45, in this case at the seat portion 42 The inner ring defines a mating curve 47. The curve has the function of curving the outer region 12 of the membrane, toward the mating parts 36, 38.

The outer ring 32 further comprises a membrane guide 46A which is curved and prevents damage to the membrane when the membrane is deformed. The inner ring 30 comprises a similar membrane guide 46B which is curved and which prevents damage to the membrane 10 when the membrane is deformed in an opposite direction.

When travelling from a middle portion 140 of the membrane to an outer ridge 11 of the membrane, the membrane first starts to curve at a meeting location 142 where the membrane meets the inner ring and the outer ring. The curvature is in a first direction of curvature. Subsequently, the membrane curves in an opposite direction of curvature at the curve 45, 47 toward the mating parts 36, 38. The membrane subsequently curves through the curved form defined by the mating parts 36, 38. When travelling towards the ridge 11, the membrane first curves inwardly toward the center of the membrane holder and subsequently curves outwardly away from the center of the annular membrane holder. Above the mating parts 36, 38, the membrane extends over a small distance and ends at the ridge 11 of the membrane.

The four curves can be defines as four curve regions of the membrane. In other words, the membrane comprises the following four curve regions:
1. a first region of curvature 180 having a first direction of curvature,
2. a second region of curvature 181 having a second, opposite direction of curvature
3. a third region of curvature 182 having a curvature inward, into the vessel, and
4. a fourth region of curvature 183 having a curvature outward, to the wall of the vessel.

When the membrane holder and membrane are connected, the membrane may be deformed, as is discussed in relation to figures 1A-1C.

Turning to figure 2D, it is shown how the membrane holder 14 is connected to the housing while in a same operation the two parts of the housing are connected to one another. The housing 48 comprises a first housing part 50 (also referred to as a first vessel halve) and a second housing part 52 (also referred to as a second vessel halve), which have overlapping sections 54, 56. The housing parts 50, 52 may be halves but need not be of the same size. The housing parts 50, 52 are preferably made of steel. The housing has a circular, cylindrical shape. The wall of the housing parts 50, 52 has an inner side and an outer side. The overlapping sections 54, 56 overlap in a region of overlap 58.

It will be understood that the words "metal halve" does not mean that the two metal parts need to be exactly equal in size. Rather, the two metal halves should form the housing together, and can have different sizes. Alternatively, the housing can comprise a one-piece unit, which is easy to manufacture. The housing can be of any shape, preferably, of a right circular cylinder shape. The housing comprises a wall having an inner side and an outer side. The housing can be made of metal or any other suitable material, such a synthetic material, in particular a hard plastic.

The method comprises inserting the membrane holder 14 into the housing of the expansion vessel in such a way that an outer perimeter 60 of the membrane holder 14 is circumferentially abutted to an inner wall of the housing part 50.

A laser welding device 100 is provided from the outside and a laser beam 102 is directed toward the housing parts 50, 52 and the membrane holder 14. The housing parts 50, 52 and the membrane holder 14 are welded to one another. The three parts may be connected to one another in a single circumferential weld. The circumferential weld creates and air-tight and fluid tight connection between the membrane holder 14 and the housing which is formed by housing parts 50, 52.

The laser beam provides a high energy deeply into the contact area between the housing and the membrane holder, and generates a narrow and deep weld. The depth of the weld can be up to 25 mm.

When the expansion vessel is completed, the membrane 10 divides the volume formed by the housing into two parts, with a first part acting as a first chamber for storing water, and with a second part acting as a second chamber for storing gas.

As the membrane holder 14 is welded to the inside of the wall of the housing, the housing per se forms a protection layer with respect to the membrane holder for protecting the membrane holder from the corrosion or damage by, e.g. a collision. This prolongs the usage period of the expansion vessel.

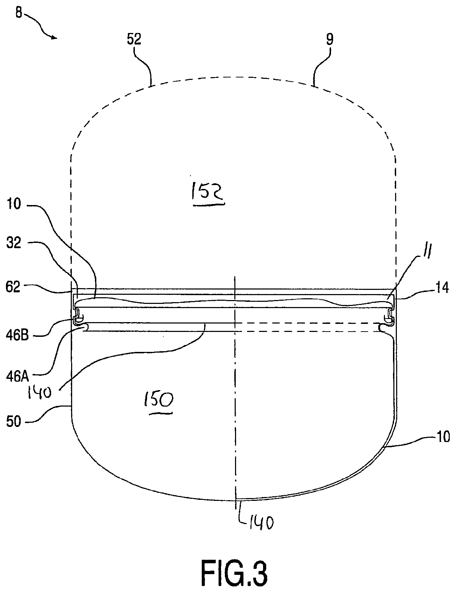

Turning to figure 3, another embodiment of the expansion vessel 8 is shown. The expansion vessel comprises a housing 9. The membrane holder 14 is first connected to a housing part 50 (or vessel halve). To this end, the assembly of the inner ring, outer ring and membrane is positioned at the inner side of the housing part 50. The membrane holder is connected to said housing part 50. Next, the housing part 50 is connected at its ridge 62 to another housing part 52 shown in dashed lines. Both the connection between the membrane holder and the first housing part and between the first housing part and the second housing part are performed by laser welding from the outside.

The membrane divides the total volume in a first volume 150 and a second volume 152.

The membrane holder 14 is welded to the inner wall of the housing by the laser welding device by directing the laser beam at a contact area between the membrane holder 14 and the inner wall of the housing. The laser beam provided by the laser welding device penetrates through the inner wall of the housing and a tip of the laser beam at least reaches a portion of the membrane holder 14 to form a weld between the housing part 50 and the membrane holder 14. The weld comprises a line weld which extends circumferentially around the expansion vessel. The line weld is provided at the contact area between the membrane holder 14 and the inner side of the wall of the housing part 50. The line weld provides a first fluid tight connection between the membrane holder 14 and the housing 9.

During the welding operation, the laser beam 102 is moved along the entire outer circumference of the housing, i.e. perpendicular to the plane of drawing, and performs an annular weld which connects the membrane holder to the housing.

Turning to figure 4, a membrane 10 is shown. The membrane comprises a first, protective layer 201, a second, gas-impermeable layer 202 and a third, protective layer 203. The three layers are interconnected via first and second adhesive layers 204.

The second, gas-impermeable layer may be composed of Ethylene Vinyl Alcohol (EVOH). EVOH is known for its good impermeability.

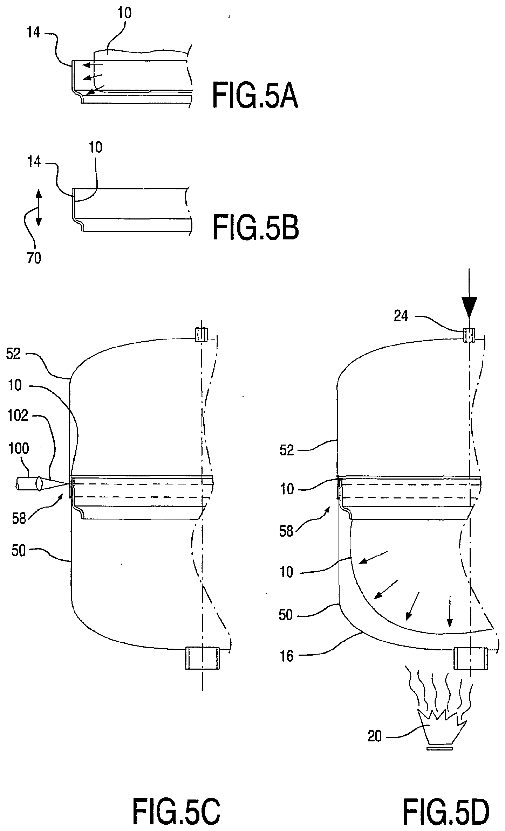

Turning to figures 5A, 5B, 5C, 5D a method of bonding a membrane 10 onto a membrane holder 14 is shown. Figure 5a shows how the membrane 10 is directly bonded to the membrane holder 14. The bonding may be chemical bonding. A bonding agent may be used. Bonding agents are known in the field of the art. The bonding may also be physical bonding. The surface area of the bonded connection is rather large, i.e. the membrane can be bonded over a considerable width 70 onto the membrane holder 14, see fig. 5B. The width 70 extends parallel to the housing. The connection extends circumferentially around the inner side of the membrane holder 14.

Figure 5c shows how the membrane holder is welded to the housing parts 50, 52 while at the same time connecting the housing parts 50, 52 to one another. This connection is performed by laser welding from the outside. The parts 50, 52 and 14 form a region of overlap 58. If the laser weld deteriorates the quality of the cured connection between the membrane 10 and the membrane holder 14, this will only locally affect the cured connection and not deteriorate the overall quality of the connection between the membrane and the membrane holder, because a width of the weld is substantially smaller than the width 70 of the cured connection. In another embodiment, a first laser weld is performed to weld the membrane holder 14 to housing part 50 and in a second, separate laser weld, the housing part 52 is welded to housing part 50.

Turning to figure 5D, in a next step, overpressure is applied by blowing air or another gas via the opening 24 into the expansion vessel. The membrane 10 is deformed against the housing part 50, and heated with a heating device 20. The membrane 10 becomes plastic and deforms plastically. The housing part is used as a mould 16. Next, the heating device 20 is removed or switched off; the membrane 10 cools and becomes elastic again.

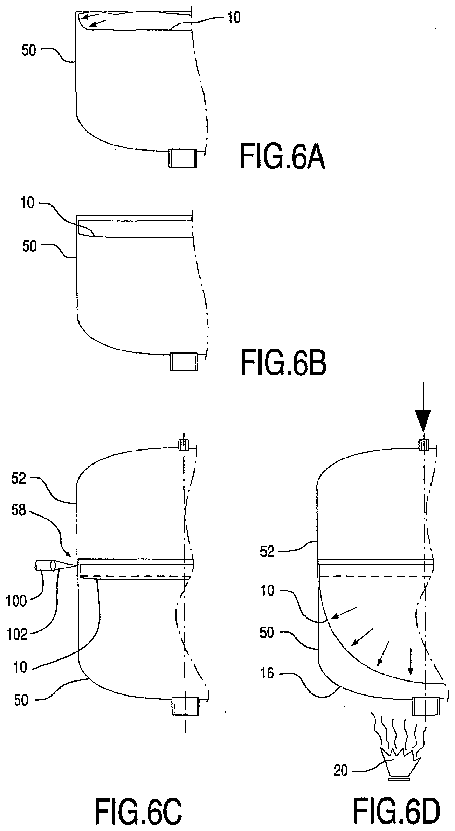

Turning to figures 6A, 6B, 6C, 6D, a similar process as in Figures 5A - 5D is shown, except that the membrane 10 is connected directly onto a housing part 50 by bonding. The bonding may be chemical or physical bonding. A bonding agent may be used. Subsequently, the housing part 50 including the membrane 10 is connected to another housing part 52. Next, the membrane is plastically deformed by a combination of pressure and heating, wherein the housing part 50 is used as a mould.

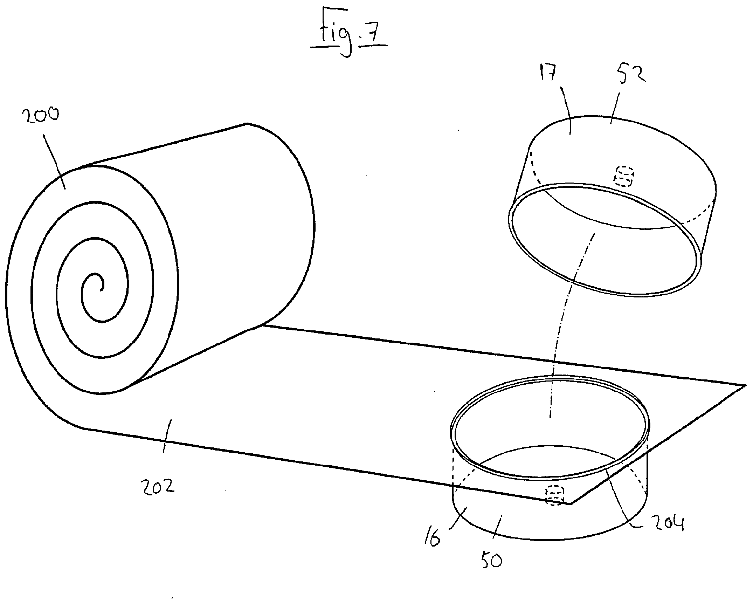

Turning to figure 7, another embodiment of the expansion vessel is shown in connection with another method of manufacturing the expansion vessel. A roll 200 of membrane material is provided from which the membrane material 202 is spooled. A first housing part 50 is provided, also called a first vessel halve 16. The membrane material which comes from the roll is flat. The membrane material, in particular a region which is intended to form the outer region of the membrane, is engaged with the first housing part 50, in particular on the ridge 204 of the first housing part 50. A second housing part 52, also referred to as a second vessel halve 17, is engaged with the first vessel halve 16. Excess material of the membrane can be cut away.

This embodiment does not have a separate membrane holder, i.e. the membrane 10 is connected to the housing parts 50, 52 directly. However, a membrane holder may be used.

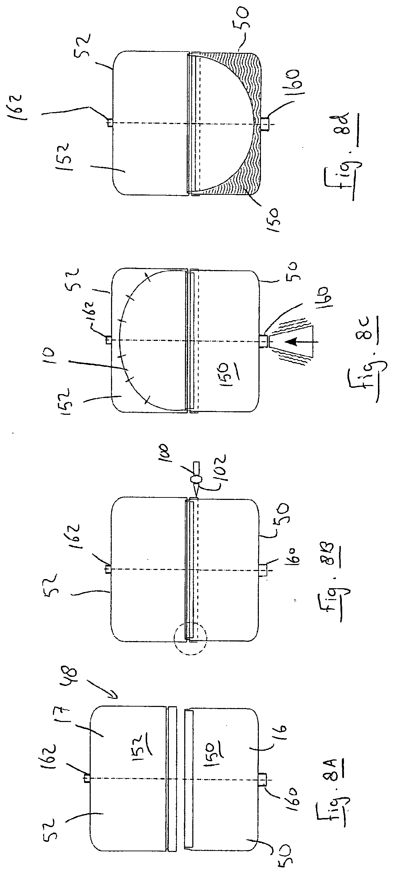

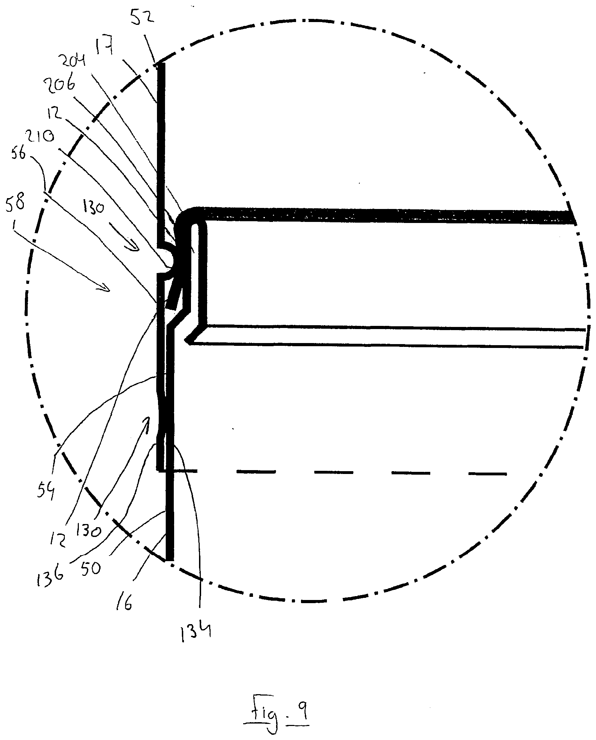

Turning to figure 8A and figure 9, the second housing part 52 is placed over the first housing part 50. To this end a region 58 of overlap is formed. The region comprises:
o a clenching region 130 and
o a connecting region 132,
wherein the membrane is clenched between the vessel halves in the clenching region and wherein the vessel halves are connected to one another in the connecting region. The clenching region and connecting region may be separate regions. The clenching region and connecting region may be adjoining, separate regions.

The first housing part 50 has an overlapping section 54 comprising an inwardly receding section 206. The inwardly receding section 206 forms the clenching region 132 with a part 210 of the overlapping section 56 of the second vessel halve 17. The membrane is clenched between the vessel halves. The part 210 may be an inwardly protruding section of the second vessel halve, in particular an inwardly protruding rim 210. The part 210 presses against the inwardly receding section 206n and clenches the outer region 12 of the membrane there between.

The outer region 12 of the membrane extends downward relative to the middle portion 140 of the membrane 10 and is clenched between an upwardly directed receding section 206 and the part 210 of the second housing part 52.

The connecting region 132 is formed by a wall section 134 of the first housing part 50 and a wall part 136 of the second housing part 52.

Figure 8A shows that the first housing part 50 is slightly smaller than the second housing part 52. Figure 8A shows that the first volume 150 is slightly smaller than the second volume 152.

Figure 8B shows that after the first and second housing parts are engaged, they are connected with laser welding.

Figure 8C shows that the membrane 10 is blow-moulded against the housing, and in particular against the larger housing part 152. This has the positive effect that in use, the membrane will never undergo pure extension, or stretch, with accompanying tensile stresses.

Figure 8D shows that in the use situation the smaller volume 150 is filled with the liquid or gas that needs to be able to expand, and the larger volume 152 is filled with the gas that provides the back pressure on the membrane. Opening 160 is an opening for a medium which needs to be able to expand and which is typically configured to be connected to a conduit system. The opening 162 is an opening for a gas which provides the back pressure.

It will be obvious to a person skilled in the art that the details and the arrangement of the parts may be varied over considerable range without departing from the scope of the claims.

## Claims

1. Method of manufacturing an expansion vessel (8) comprising a housing (9) and a membrane (10) which divides the housing in two volumes, the method comprising:
- providing the housing (9),
- providing a membrane (10) comprising a thermoplastic material,
- providing a mould (16) having a non-flat form,
- providing a vacuum/blowing device (18) which is constructed to deform the membrane according to the shape of the mould by providing an overpressure or underpressure on one side of the membrane,
- providing a heating device (20) which is configured for providing heat to the membrane during the vacuum/blow moulding process,
the method comprising the further steps of:
- deforming the membrane with the vacuum/blowing device according to the shape of the mould, while providing heat to the membrane with the heating device, thereby allowing the thermoplastic material to deform plastically,
- cooling the deformed membrane to below the temperature wherein the thermoplastic material deforms, thereby forming the thermoplastic material in a non-flat form according to the shape of the mould, and
- connecting the membrane directly or indirectly to the housing of the expansion vessel,
wherein the method comprises using the housing or a part of the housing of the expansion vessel as the mould.

2. Method according to claim 1, comprising:
- providing a housing comprising a first housing part (50) and a second housing part (52),
- connecting the membrane to a housing part, directly or indirectly via a membrane holder,
- blow-moulding the membrane in the housing, followed by cooling the membrane in order to provide the membrane in its new, non-flat form,
- joining the first housing part and the second housing part, directly or indirectly via the membrane holder, thereby forming the housing.

3. Method according to claim 2, wherein the membrane is connected permanently to the housing, directly or indirectly via the membrane holder, prior to the forming of the membrane with the blow-moulding process.

4. Method according to claim 3, comprising the subsequent steps:
∘ engaging the outer region of the membrane directly or indirectly with a first housing part;
∘ positioning a second housing part against the first housing part, thereby forming the vessel and fixating the membrane,
∘ connecting the housing parts,
∘ blow-moulding the membrane.

5. Method according to claim 4, wherein the membrane is clenched directly between the housing parts.

6. Method according to claim 5, wherein a region of overlap is formed between the first and second vessel halves, the region comprising:
∘ a clenching region and
∘ a connecting region,
wherein the membrane is clenched between the vessel halves in the clenching region and wherein the vessel halves are connected to one another in the connecting region.

7. Method according to any of claims 3 - 6, comprising pulling membrane material from a roll of membrane material, engaging the membrane material with a first housing part, placing the second housing part over the first housing part, and cutting away excess material of the membrane.

8. Method according to any of the preceding claims, wherein a first housing part is smaller than a second housing part, and wherein in the blow moulding step the membrane is blow moulded against the second, larger housing part.

9. Expansion vessel (8) comprising a housing and a membrane which divides the housing in two volumes, **characterized in that** the expansion vessel is manufactured with the method according to claim 1, wherein the membrane (10) comprises a thermoplastic material, and wherein in rest, i.e. with equal pressure on both sides of the membrane, the membrane has a non-flat form.

10. Assembly for manufacturing an expansion vessel, the assembly comprising:
- a mould (16, 50) for forming a membrane of the expansion vessel, the mould having a non-flat form,
- a vacuum/blowing device (18) which is constructed to deform the membrane according to the shape of the mould by providing an over pressure or under pressure on one side of the membrane,
- a heating device (20) which is configured for providing heat to the membrane during the vacuum/blow moulding process,
wherein the assembly comprises a support for supporting a formed housing part of the expansion vessel, wherein the vacuum/blowing device is constructed to provide an under pressure in said housing part or provide an over pressure in the other housing part for blow-moulding the membrane while using said housing part as a mould.

## Patentansprüche

1. Verfahren zum Herstellen eines Expansionsgefäßes (8), das ein Gehäuse (9) und eine Membran (10), die das Gehäuse in zwei Volumen unterteilt, umfasst, wobei das Verfahren Folgendes umfasst:
- Bereitstellen des Gehäuses (9),
- Bereitstellen einer Membran (10), die ein thermoplastisches Material umfasst,
- Bereitstellen eines Formwerkzeugs (16), das eine nicht ebene Form aufweist,
- Bereitstellen einer Unterdruck/Blas-Vorrichtung (18), die ausgelegt ist, die Membran entsprechend der Form des Formwerkzeugs zu verformen, indem auf einer Seite der Membran ein Überdruck oder ein Unterdruck bereitgestellt wird,
- Bereitstellen einer Heizvorrichtung (20), die zum Bereitstellen von Wärme an der Membran während des Unterdruck/Blas-Formprozesses konfiguriert ist,
wobei das Verfahren die folgenden weiteren Schritte umfasst:
- Verformen der Membran mit der Unterdruck/Blas-Vorrichtung entsprechend der Form des Formwerkzeugs, während mit der Heizvorrichtung Wärme an der Membran bereitgestellt wird, wodurch ermöglicht wird, dass sich das thermoplastische Material plastisch verformt,
- Abkühlen der verformten Membran unter die Temperatur, bei der sich das thermoplastische Material verformt, wodurch das thermoplastische Material in einer nicht ebenen Form entsprechend der Form des Formwerkzeugs ausgebildet wird, und
- Verbinden der Membran direkt oder indirekt mit dem Gehäuse des Expansionsgefäßes,
wobei das Verfahren das Verwenden des Gehäuses oder eines Abschnitts des Gehäuses des Expansionsgefäßes als das Formwerkzeug umfasst.

2. Verfahren nach Anspruch 1, das Folgendes umfasst:
- Bereitstellen eines Gehäuses, das einen ersten Gehäuseabschnitt (50) und einen zweiten Gehäuseabschnitt (52) umfasst,
- Verbinden der Membran direkt oder indirekt über einen Membranhalter mit einem Gehäuseabschnitt,
- Blasformen der Membran im Gehäuse, gefolgt vom Abkühlen der Membran, um die Membran in ihrer neuen, nicht ebenen Form bereitzustellen,
- Verbinden des ersten Gehäuseabschnitts und des zweiten Gehäuseabschnitts direkt oder indirekt über den Membranhalter, wodurch das Gehäuse gebildet wird.

3. Verfahren nach Anspruch 2, wobei die Membran vor dem Bilden der Membran mit dem Blasformprozess direkt oder indirekt über den Membranhalter dauerhaft mit dem Gehäuse verbunden wird.

4. Verfahren nach Anspruch 3, das die nachfolgenden Schritte umfasst:
∘ In-Eingriff-Bringen des äußeren Bereichs der Membran direkt oder indirekt mit einem ersten Gehäuseabschnitt,
∘ Anordnen eines zweiten Gehäuseabschnitts gegen den ersten Gehäuseabschnitt, wodurch das Gefäß gebildet wird und die Membran arretiert wird,
∘ Verbinden der Gehäuseabschnitte,
∘ Blasformen der Membran.

5. Verfahren nach Anspruch 4, wobei die Membran direkt zwischen den Gehäuseabschnitten umgeschlagen wird.

6. Verfahren nach Anspruch 5, wobei ein Überlappungsbereich zwischen der ersten und der zweiten Gefäßhälfte gebildet wird, wobei der Bereich Folgendes umfasst:
∘ einen Umschlagbereich, und
∘ einen Verbindungsbereich,
wobei die Membran im Umschlagbereich zwischen den Gefäßhälften umgeschlagen wird und wobei die Gefäßhälften im Verbindungsbereich miteinander verbunden werden.

7. Verfahren nach einem der Ansprüche 3-6, das das Ziehen von Membranmaterial von einer Rolle eines Membranmaterials, das In-Eingriff-Bringen des Membranmaterials mit einem ersten Gehäuseabschnitt, das Anordnen des zweiten Gehäuseabschnitts über dem ersten Gehäuseabschnitt und das Wegschneiden von überschüssigem Material der Membran umfasst.

8. Verfahren nach einem der vorhergehenden Ansprüche, wobei ein erster Gehäuseabschnitt kleiner als ein zweiter Gehäuseabschnitt ist und wobei im Blasformschritt die Membran gegen den zweiten, größeren Gehäuseabschnitt blasgeformt wird.

9. Expansionsgefäß (8), das ein Gehäuse und eine Membran, die das Gehäuse in zwei Volumen unterteilt, umfasst, **dadurch gekennzeichnet, dass** das Expansionsgefäß mit dem Verfahren nach Anspruch 1 hergestellt wird, wobei die Membran (10) ein thermoplastisches Material umfasst und wobei die Membran in Ruhestellung, d. h. mit gleichem Druck auf beiden Seiten der Membran, eine nicht ebene Form aufweist.

10. Anordnung zum Herstellen eines Expansionsgefäßes, wobei die Anordnung Folgendes umfasst:
- ein Formwerkzeug (16, 50) zum Bilden einer Membran des Expansionsgefäßes, wobei das Formwerkzeug eine nicht ebene Form aufweist,
- eine Unterdruck/Blas-Vorrichtung (18), die ausgelegt ist, die Membran entsprechend der Form des Formwerkzeugs zu verformen, indem ein Überdruck oder Unterdruck auf einer Seite der Membran bereitgestellt wird,
- eine Heizvorrichtung (20), die zum Bereitstellen von Wärme an der Membran während des Unterdruck/Blas-Formprozesses konfiguriert ist,
wobei die Anordnung einen Träger zum Tragen eines gebildeten Gehäuseabschnitts des Expansionsgefäßes umfasst, wobei die Unterdruck/Blas-Vorrichtung ausgelegt ist, zum Blasformen der Membran, während der Gehäuseabschnitt als ein Formwerkzeug verwendet wird, einen Unterdruck in dem Gehäuseabschnitt bereitzustellen oder einen Überdruck im anderen Gehäuseabschnitt bereitzustellen.

## Revendications

1. Procédé de fabrication d'un vase d'expansion (8) comportant une enveloppe (9) et une membrane (10) qui divise l'enveloppe en deux volumes, ce procédé comprenant :
- la fourniture de l'enveloppe (9),
- la fourniture d'une membrane (10) comportant un matériau thermoplastique,
- la fourniture d'un moule (16) ayant une forme non plate,
- la fourniture d'un dispositif d'aspiration/de soufflage (18) qui est construit afin de déformer la membrane conformément à la forme du moule en fournissant une surpression ou une dépression sur un côté de la membrane,
- la fourniture d'un dispositif de chauffage (20) qui est configuré de façon à fournir de la chaleur à la membrane pendant le processus d'aspiration/de soufflage,
ce procédé comprenant les étapes supplémentaires suivantes :
- la déformation de la membrane avec le dispositif d'aspiration/de soufflage conformément à la forme du moule, tout en fournissant de la chaleur à la membrane avec le dispositif de chauffage, permettant ainsi au matériau thermoplastique de se déformer plastiquement,
- le refroidissement de la membrane déformée jusqu'à en dessous de la température à laquelle le matériau thermoplastique se déforme, formant ainsi le matériau thermoplastique en une forme non plate conformément à la forme du moule, et
- le raccordement de la membrane directement ou indirectement à l'enveloppe du vase d'expansion,
ce procédé comprenant l'utilisation de l'enveloppe ou d'une partie de l'enveloppe du vase d'expansion comme le moule.

2. Procédé selon la revendication 1, comprenant :
- la fourniture d'une enveloppe comprenant une première partie d'enveloppe (50) et une deuxième partie d'enveloppe (52),
- le raccordement de la membrane à une partie de l'enveloppe, directement ou indirectement via un porte-membrane,
- le moulage par soufflage de la membrane dans l'enveloppe, suivi du refroidissement de la membrane afin de fournir la membrane dans sa nouvelle forme non plate,
- la jonction de la première partie de l'enveloppe et de la deuxième partie de l'enveloppe, directement ou indirectement via le porte-membrane, formant ainsi l'enveloppe.

3. Procédé selon la revendication 2, dans lequel la membrane est raccordée de façon permanente à l'enveloppe, directement ou indirectement via le porte-membrane, avant la formation de la membrane avec de processus de moulage par soufflage.

4. Procédé selon la revendication 3, comprenant les étapes ultérieures suivantes :
∘ l'engagement de la région extérieure de la membrane directement ou indirectement avec une première partie de l'enveloppe ;
∘ le positionnement d'une deuxième partie de l'enveloppe contre la première partie de l'enveloppe, formant ainsi le récipient et fixant la membrane,
∘ le raccordement des parties de l'enveloppe,
∘ le moulage par soufflage de la membrane.

5. Procédé selon la revendication 4, dans lequel la membrane est serrée directement entre les parties de l'enveloppe.

6. Procédé selon la revendication 5, dans lequel une région de chevauchement est formée entre la première et la deuxième moitié du récipient, cette région comprenant :
∘ une région de serrage et
∘ une région de raccordement,
la membrane étant serrée entre les moitiés du récipient dans la région de serrage et les moitiés du récipient étant raccordées l'une à l'autre dans la région de raccordement.

7. Procédé selon l'une quelconque des revendications 3 à 6, comprenant le tirage de matériau de membrane d'un rouleau de matériau de membrane, l'engagement du matériau de membrane avec une première partie de l'enveloppe, la mise en place de la deuxième partie de l'enveloppe au-dessus de la première partie de l'enveloppe, et la coupe d'excès de matériau de la membrane.

8. Procédé selon l'une quelconque des revendications précédentes, dans lequel la première partie de l'enveloppe est plus petite qu'une deuxième partie de l'enveloppe, et dans lequel l'étape de moulage par soufflage de la membrane est effectuée contre la deuxième partie de l'enveloppe qui est plus grande.

9. Vase d'expansion (8) comportant une enveloppe et une membrane qui divise l'enveloppe en deux volumes, **caractérisé en ce que** ce vase d'expansion est fabriqué avec le procédé selon la revendication 1, dans lequel la membrane (10) comporte un matériau thermoplastique, et dans lequel au repos, c'est-à-dire avec une pression égale des deux côtés de la membrane, la membrane a une forme non plate.

10. Ensemble pour fabriquer un vase d'expansion, cet ensemble comprenant :
- un moule (16, 50) pour former une membrane du vase d'expansion, ce moule ayant une forme non plate,
- un dispositif d'aspiration/de soufflage (18) qui est construit afin de déformer la membrane conformément à la forme du moule en fournissant une surpression ou une dépression sur un côté de la membrane,
- un dispositif de chauffage (20) qui est configuré de façon à fournir de la chaleur à la membrane pendant le processus d'aspiration/de soufflage,
cet ensemble comprenant un support pour supporter une partie formée de l'enveloppe du vase d'expansion, le dispositif d'aspiration/de soufflage étant construit de façon à fournir une dépression dans ladite partie de l'enveloppe ou à fournir une surpression dans l'autre partie de l'enveloppe afin de mouler par soufflage la membrane tout en utilisant ladite partie de l'enveloppe comme un moule.
